# EUROPEAN PATENT SPECIFICATION

(11) **EP 2 472 374 B1**
(45) Date of publication and mention of the grant of the patent: **20.03.2019**
(21) Application number: 10812252.4
(22) Date of filing: 24.08.2010
(51) Int. Cl.: G06F 3/01, G06F 3/0488, G06F 1/16, H04M 1/725

(54) **METHOD FOR PROVIDING A UI USING MOTIONS**
VERFAHREN ZUR BEREITSTELLUNG EINER BENUTZERSCHNITTSTELLE
PROCÉDÉ PERMETTANT DE FOURNIR UNE UI AU MOYEN DE MOUVEMENTS

(30) Priority: 24.08.2009 KR 20090078367; 24.08.2009 KR 20090078369
(43) Date of publication of application: 04.07.2012
(73) Proprietor: Samsung Electronics Co., Ltd., Suwon-si, Gyeonggi-do, 443-742 (KR)
(72) Inventor: PARK, Yong-Gook, Yongin-si Gyeonggi-do 446-581 (KR); JUNG, Han-Chul, Seoul 138-220 (KR); PARK, Min-Kyu, Seongnam-si Gyeonggi-do 463-706 (KR); KANG, Tae-Young, Uijeongbu-si Gyeonggi-do 480-020 (KR); KIM, Bo-Min, Seoul 152-748 (KR); KIM, Hyun-Jin, Seoul 137-773 (KR)
(74) Representative: HGF Limited
(86) International application number: PCT/KR2010/005662
(87) International publication number: WO 2011/025239

(56) References cited:
- WO-A1-2009/096644
- WO-A2-2005/103862
- JP-A- 2006 331 432
- KR-A- 20070 007 807
- KR-A- 20080 085 983
- KR-A- 20090 070 050
- US-A1- 2005 210 417
- US-A1- 2006 028 429
- US-A1- 2006 081 771
- US-A1- 2006 146 009
- US-A1- 2007 290 999
- US-A1- 2008 280 642
- US-A1- 2009 153 466

## Description

### Technical Field

The present invention relates to a method of providing a user interface (UI), and a device adopting the method, and more particularly, to a method of providing a UI for entering a command to execute a function desired by a user and a device adopting the method.

### Background Art

User interfaces (UIs), which connect devices and users, have been developed as means for users to enter any desired command with convenience.

UIs not only allow users to enter commands but also additionally provide users with various entertainment features, and recent trends in the development of UIs increasingly tend to be directed toward the latter because of ever-increasing user preferences for products equipped with UIs focusing on the provision of additional entertainment features.

Therefore, a method is needed to provide a UI that not only can make it easier to enter various user commands but also can excite amusement for users while using devices and stimulate users' consumption.

International patent application WO2009/096644 describes a mobile device with a UI that accepts spatial gestures of the user as input for triggering the performance of a function of an application in the context of a given operation mode of the device.

US 2007/0290999 A1 (Cho et al) describes a method, medium and apparatus browsing images. The method browsing images includes sensing acceleration imparted to a portable digital device, and moving an image onto a display area in accordance with a tile angle of the portable digital device if the sensed acceleration is greater than a first threshold value.

US 2005/0210417 A1 (Marvit et al) describes a motion controlled handheld device including a display and operable to generate an image and a gesture database maintaining a plurality of gesture. Each gesture is defined by a motion of the device with respect to a first position of the device.

### Technical Problem

The present invention provides a method of providing a UI that executes a function mapped to a motion or outputs an effect associated with the function based on the size of the motion, and a device adopting the method.

### Technical Solution

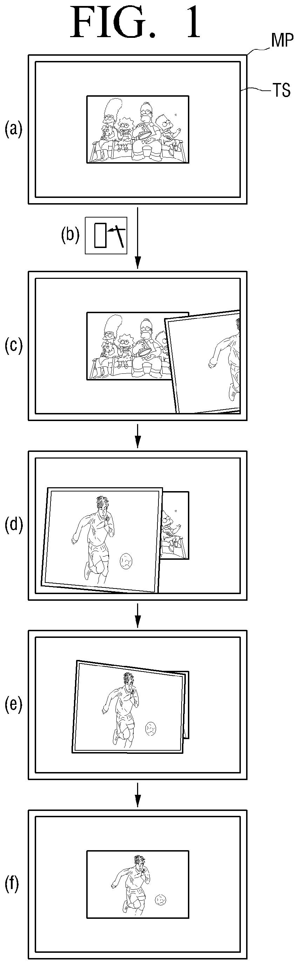

The present invention provides a method according to claim 1. Further aspects of the invention are outlined in the dependent claims. Embodiments which do not fall within the scope of the claims, in particular the embodiments described with respect to figures 1-4 and 6, do not describe part of the present invention.

The method may include: in response to a size of the identified motion exceeding a first threshold, performing the function; and in response to the size of the identified motion not exceeding the first threshold, outputting an effect that is relevant to the function.

The method may also include, in response to a value of at least one of a plurality of parameters of the identified motion exceeding a threshold, determining that the size of the identified motion exceeds the first threshold.

The effect relevant to the function may include a visual effect that helps the user intuitively recognize the function.

The outputting may include outputting different visual effects for motions of different sizes.

The outputting may include outputting the effect in response to the size of the identified motion not exceeding the first threshold but exceeding the second threshold, which is less than the first threshold.

In a case in which there are multiple functions that can be performed in response to the size of the identified motion exceeding the first threshold, the outputting may include outputting visual effects that are relevant to the multiple functions together in response to the size of the identified motion not exceeding the first threshold.

In a case in which there are multiple functions that can be performed in response to the size of the identified motion exceeding the first threshold, the performing may include performing a function that is selected from among the multiple functions by the user while making the identified motion, in response to the size of the identified motion exceeding the first threshold.

The selected function may correspond to a function relevant to an icon selected by the user.

The effect may include at least one of an audio effect and a tactile effect.

According to another aspect of the present invention, there is provided a device including: a sensing unit which senses a user's motion; and a control unit.

The control unit may control the function to be performed in response to a size of the sensed motion exceeding a first threshold, and may output an effect that is relevant to the function in response to the size of the sensed motion not exceeding the first threshold.

The effect relevant to the function may include a visual effect that helps the user intuitively recognize the function.

The controller may control different visual effects to be output for motions of different sizes.

The controller may control a visual effect including a movement that is proportional to the size of the sensed motion.

In a case in which there are multiple functions that can be performed in response to the size of the sensed motion exceeding the first threshold, the control unit may control visual effects that are relevant to the multiple functions to be output together in response to the size of the sensed motion not exceeding the first threshold.

In a case in which there are multiple functions that can be performed in response to the size of the sensed motion exceeding the first threshold, the control unit may control a function that is selected from among the multiple functions by the user while making the sensed motion to be performed in response to the size of the sensed motion exceeding the first threshold.

### Advantageous Effects

Since a device may be configured to perform a function mapped to the user's motion or to output an effect relevant to the function in consideration of the size of the user's motion, it is possible for the user to easily identify the function and thus to easily enter a command with convenience. Furthermore, due to the effect, it is possible to excite amusement for the user while using the device.

### Description of Drawings

FIGS. 1 to 4 are diagrams illustrating various embodiments of the present invention
FIG. 5 is a block diagram of a device to which the present invention can be applied
FIG. 6 is a flowchart illustrating a method of providing a UI according to an embodiment of the present invention.
FIGS. 7 to 13 are diagrams illustrating various other embodiments of the present invention.
FIG. 14 is a diagram for explaining the embodiments of FIGS. 7 to 13 in detail.
FIG. 15 is a block diagram of a device to which the present invention can be applied.
FIG. 16 is a flowchart illustrating a method of providing a UI according to another embodiment of the present invention.

### Mode for Invention

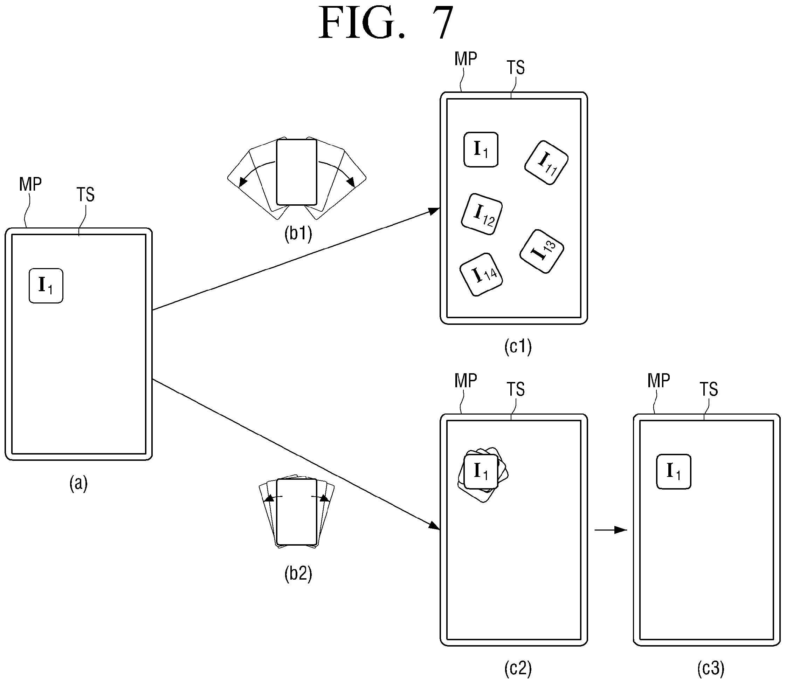

The invention is described more fully hereinafter with reference to the accompanying drawings, in which exemplary embodiments of the invention are shown. An example of executing a function that is mapped to a plurality of motions in response to a user's motion matching any one of the plurality of motions is described with reference to FIGS. 1 to 6, and a method of providing a UI that provides different functions for motions of different sizes is described with reference to FIGS. 7 to 16.

### 1. Exemplary Embodiments

FIG. 1(a) illustrates a mobile phone MP with a touch screen TS that displays a graphic user interface (GUI). Referring to FIG. 1(a), a single image is displayed in the GUI.

FIG. 1(b) illustrates a 'tip' motion (for example, tipping the right side of the mobile phone MP, and FIGS. 1(c) to 1(f) illustrate gradual variations in the GUI in response to the 'tip' motion.

Referring to FIG. 1(c) to 1(f), the GUI displays a visual effect of the next image appearing from the right side of the mobile phone MP and falling in a zigzag manner over the current image.

In response to the detection of a 'tip' motion from the left side of the mobile phone MP, the GUI may display a visual effect of the previous image appearing from the left side of the mobile phone MP and falling in a zigzag manner over the current image.

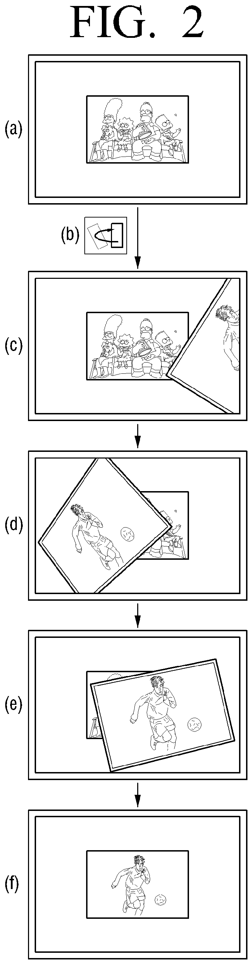

FIG. 2(a) also illustrates a mobile phone MP with a touch screen TS that displays a GUI. FIG. 2(b) illustrates a 'snap' motion (for example, snapping the mobile phone MP to the left). FIGS. 2(c) to 2(f) illustrate gradual variations in the GUI in response to the 'snap' motion.

Referring to FIG. 2(c) to 2(f), the GUI displays a visual effect of the next image appearing from the direction from which the 'snap' motion is detected, i.e., the left side of the mobile phone MP, and falling in a circular motion over the current image.

In response to the detection of the 'snap' motion from the left side of the mobile phone MP, the GUI may display a visual effect of the previous image appearing from the right side of the mobile phone MP and falling in a circular motion over the current image.

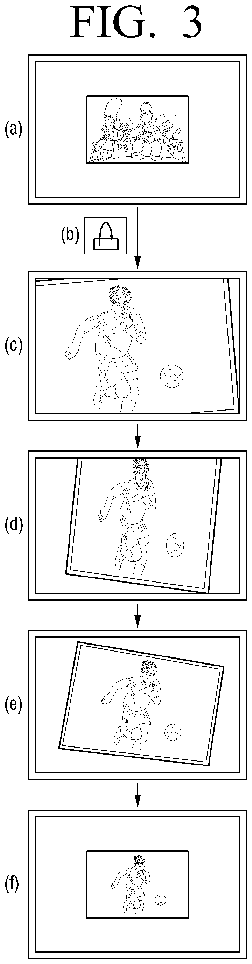

FIG. 3(a) also illustrates a mobile phone MP with a touch screen TS that displays a GUI. FIG. 3(b) illustrates a 'bounce' motion (for example, bouncing up or down the mobile phone MP). FIGS. 3(c) to 3(f) illustrate gradual variations in the GUI in response to the 'bounce' motion.

Referring to FIGS. 3(c) to 3(f), the GUI displays a visual effect of the next image appearing from above the current image and falling over the current image.

In response to the user putting down the mobile terminal and then lifting it up, the GUI may display a visual effect of the previous image appearing from behind the current image and rising above the current image.

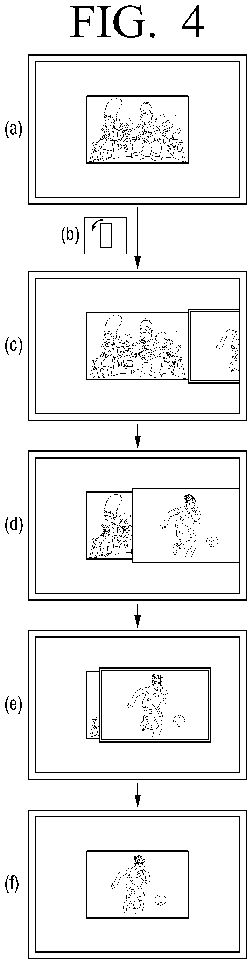

FIG. 4(a) also illustrates a mobile phone MP with a touch screen TS that displays a GUI. FIG. 4(b) illustrates a 'rotate' motion (for example, rotating the mobile phone MP to the left). FIGS. 4(c) to 4(f) illustrate gradual variations in the GUI in response to the 'rotate' motion.

Referring to FIGS. 4(c) to 4(f), the GUI displays a visual effect of the next image appearing from the direction in which the mobile terminal is rotated, i.e., the left side of the mobile terminal, and sliding over the current image.

In response to the user rotating the mobile terminal to the right, the GUI may display a visual effect of the previous image appearing from the direction in which the mobile terminal is rotated, i.e., the left side of the mobile terminal and sliding over the current image.

In the examples illustrated in FIGS. 1 to 4, in response to a user performing one of the 'tip' motion (for example, tipping the right side of the mobile terminal), the 'snap' motion (for example, snapping the mobile terminal to the right), the 'bounce' motion (for example, bounding up and down the mobile terminal), and the 'rotate' motion (for example, rotating the mobile terminal), an image currently being displayed on a touch screen may disappear, and a subsequent image may be displayed on the touch screen. That is, a mobile terminal may perform the same function, i.e., an image turner function, for different motions performed by the user, i.e., the 'tip' motion, the 'snap' motion, the 'bounce' motion and the 'rotate' motion, because the 'tip' motion, the 'snap' motion, the 'bounce' motion and the 'rotate' motion are all mapped to the image turner function.

However, a visual effect for turning images, i.e., making a current image disappear and making a subsequent image appear, may vary from one motion to another motion performed by the user.

### 2. Visual Effect

### (1) Determination of Visual Effect Based on Parameters of Motion

Even for motions of the same type, a visual effect may vary depending on the trajectories of the motions. For example, visual effects for motions of the same type may be basically similar except for in terms of certain visual elements thereof.

For example, for a 'tip' motion, a visual effect may be basically as illustrated in FIGS. 1(c) to 1(f). More specifically, a direction in which a subsequent image to a current image appears may be determined based on the direction of a motion, which is determined by analyzing the trajectory of the motion, and the speed at which the subsequent image appears may be determined by the speed of the motion, which is also determined by analyzing the trajectory of the motion.

For example, the faster the motion, the faster the subsequent image appears, and the slower the motion, the slower the subsequent image appears. That is, the speed at which the subsequent image appears may be proportional to the speed of the motion.

The degree of the shaking or the rotating of the subsequent image may be determined by the degree of a shake or a rotation involved in the motion, which is also determined by analyzing the trajectory of the motion.

For example, the greater the degree of a shake involved in the motion, the greater the degree of the shaking of the subsequent image, and the less the degree of a shake involved in the motion, the less the degree of the shaking of the subsequent image. That is, the degree of the shaking or the rotating of the subsequent image may be proportional to the degree of a shake or a rotation involved in the motion.

The width of the movement of the subsequent image may be determined based on the width of the motion, which is also determined by analyzing the trajectory of the motion.

For example, the greater the width of the motion, the greater the width of the movement of the subsequent image, and the less the width of the motion, the less the width of the movement of the subsequent image. Accordingly, the width of the movement of the subsequent image may be proportional to the width of the motion.

The details of a visual effect may be determined based on one or more parameters of a motion, for example, the direction, speed, and width of the motion and the degree of a shake (or a rotation) involved in the motion. Obviously, the details of a visual effect may also be determined based on various parameters of a motion, other than those set forth herein.

### (2) Determination of Visual Effect Based on Content of Image or GUI

The details of a visual effect that varies even for motions of the same type may be determined based on various factors, other than the parameters of a motion.

The details of a visual effect may be determined based on the content of an image. For example, for an image that is bright, small in size, light in texture, or has dynamic content, a visual effect for which the speed at which a subsequent image appears, the degree to which the subsequent image shakes or rotates when appearing, and the width of the movement of the subsequent image are all set to be high may be generated.

On the other hand, for an image that is dark, large in size, heavy in texture, or has static content, a visual effect for which the speed at which a subsequent image appears, the degree to which the subsequent image shakes or rotates when appearing, and the width of the movement of the subsequent image are all set to be low may be generated.

The details of a visual effect may vary depending not only on the content of an image but also on the content of a GUI background screen.

For example, for a GUI background screen that is bright, small in size, light in texture, or has dynamic content, a visual effect for which the speed at which a subsequent image to a current image appears, the degree to which the subsequent image shakes or rotates when appearing, and the width of the movement of the subsequent image are all set to be high may be generated.

### 3. Other Examples

In the above examples, an application currently being executed in a mobile phone is assumed to be an image viewer, and thus, the UI of an image viewer is displayed on the touch screen of the mobile terminal.

For the UI of another application (such as a music player), the above four motions may be mapped to different functions, or some of the four motions may be mapped to the same function and the other motions may be mapped to different functions.

In the above examples, a visual effect varies depending on the type of motion. In another example, an audio effect or a tactile effect that varies depending on the type of motion may be realized.

### 4. Device to which Present Invention Can be Applied

The above examples have been described, taking a UI provided by a mobile phone as an example. However, the present invention may also be applied to various devices, other than a mobile phone, for example, an MP3 player, a digital camera, a digital camcorder, a portable multimedia player (PMP), or the like.

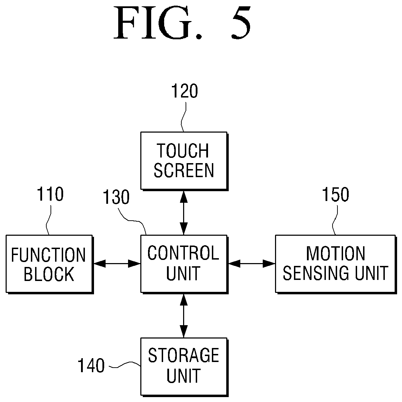

FIG. 5 is a block diagram illustrating a device to which the present invention can be applied. Referring to FIG. 5, the device includes a function block 110, a touch screen 120, a control unit 130, a storage unit 140, and a motion sensing unit 150.

The function block 110 may perform the inherent functions of the devices. For example, in response to the device being a mobile phone, the function block 110 may perform making or receiving a call, sending or receiving an SMS message, and the like. For example, in response to the device being an MP3 player, the function block 110 may play an MP3 file.

The touch screen 120 may serve as a display unit for displaying the results of an operation performed by the function block 110 and a GUI, or may also serve as a user manipulation unit for receiving a user command.

The storage unit 140 may be a storage medium for storing various programs, content, and other data necessary for driving the function block 110 and providing a GUI.

The motion sensing unit 150 may detect a user's motion while the device is being held in the user's hand, and may transmit the results of the detection to the control unit 130 as motion sensing result data.

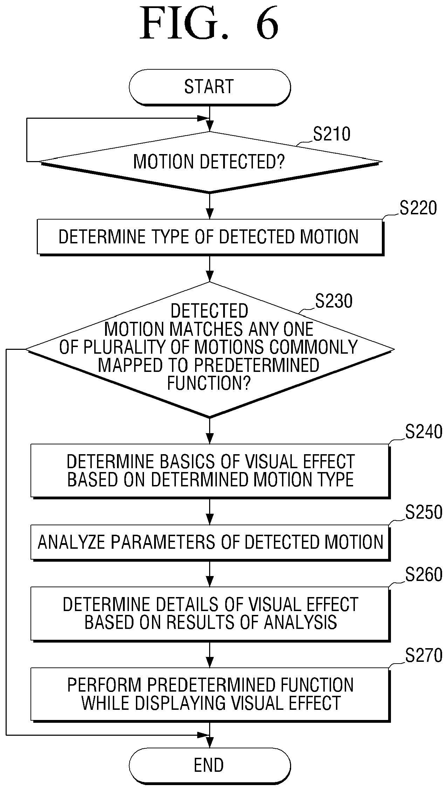

The control unit 130 may identify the type of the detected motion based on the motion sensing result data, and may analyze the parameters of the detected motion. The control unit 130 may control the function block 110 to perform a function corresponding to the detected motion along with a visual effect and may control the state of the display of a GUI on the touch screen 120. The operation of the device will hereinafter be described with reference to FIG. 6.

FIG. 6 is a flowchart illustrating a method of providing a UI according to an embodiment of the present invention.

Referring to FIG. 6, in response to the detection of the user's motion by the motion sensing unit 150 (S210-Y), the control unit 130 may identify the type of the detected motion (S220).

In response to the detected motion coinciding with any one of a plurality of motions that are all mapped to a predetermined function (S230-Y), the control unit 130 may determine the basics of a visual effect based on the identified type of the detected motion (S240).

For example, in a case in which an application currently being executed is an image viewer, the plurality of motions may include a 'tip' motion (for example, tipping the right side of a mobile phone), a 'snap' motion (for example, snapping the mobile phone to the right), a 'bounce' motion (for example, bouncing up and down the mobile phone), and a 'rotate' motion (for example, rotating the mobile phone to the left).

For example, the basics of the visual effect may include the content of an animation involved in the visual effect.

The control unit 130 may analyze the parameters of the detected motion (S250), and may determine the details of the visual effect based on the results of the analysis (S260).

For example, the parameters of the detected motion may include the direction, speed, and width of the detected motion and the degree of a shake or rotation involved in the motion. For example, the details of the visual effect may include the direction, speed and width of a movement involved in the visual effect and the degree of a shake (or a rotation) involved in the visual effect.

The control unit 130 may control the function block 110 to perform a function corresponding to the detected motion while controlling the touch screen 120 to display the visual effect based on the results of the determinations performed in S240 and S260 (S270).

An example of executing a function to which a plurality of motions are commonly mapped in response to the detection of a user's motion that coincides with any one of the plurality of motions has been described with reference to FIGS. 1 to 6.

An example of providing a UI that provides different functions for motions of different sizes will hereinafter be described with reference to FIGS. 7 to 16.

### 1. Embodiment 1

FIG. 7 illustrates a method of providing a UI according to a first embodiment of the present invention. FIG. 7(a) illustrates a mobile phone MP with a touch screen TS that displays a GUI. Referring to FIG. 7(a), a single icon I₁ is displayed in the GUI.

FIG. 7(b₁) illustrates a 'strong shake' motion, i.e., the motion of shaking the mobile phone MP heavily. FIG. 7(c₁) illustrates a variation in the GUI in response to the 'strong shake' motion.

Referring to FIG. 7(c₁), not only the icon I₁ but also a plurality of sub-icons I₁₁, I₁₂, I₁₃, and I₁₄ of the icon I₁ are displayed in the GUI. The sub-icons I₁₁, I₁₂, I₁₃, and I₁₄ may be displayed as being taken out from below the icon I₁.

FIG. 7(b₂) illustrates a 'gentle shake' motion, i.e., the motion of shaking the mobile phone MP gently. FIGS. 7(c₂) and 7(c₃) illustrate variations in the GUI in response to the 'gentle shake' motion.

Referring to FIGS. 7(c₂) and 7(c₃), a visual effect of the sub-icons I₁₁, I₁₂, I₁₃, and I₁₄ appearing from below the icon I₁ shortly and then readily turning back into the bottom of the icon I₁ is displayed in the GUI. Accordingly, a user may intuitively recognize the sub-icons I₁₁, I₁₂, I₁₃, and I₁₄ have failed to be taken out from below the icon I₁.

Then, the user may naturally assume that a stronger shake of the mobile phone MP would successfully take out the sub-icons I₁₁, I₁₂, I₁₃, and I₁₄ from the bottom of the icon I₁ so that the sub-icons I₁₁, I₁₂, I₁₃, and I₁₄ may appear on the touch screen TS.

Taking out the sub-icons I₁₁, I₁₂, I₁₃, and I₁₄ from the bottom of the icon I₁ and making them appear on the touch screen may be a function corresponding to a 'shake' motion.

Therefore, in response to a strong shake of the mobile phone MP, the mobile phone MP may perform the function corresponding to the 'shake' motion. On the other hand, in response to a gentle shake of the mobile phone MP, the mobile phone MP may provide a visual effect that helps the user to intuitively recognize what the function corresponding to the 'shake' motion is.

### 2. Embodiment 2

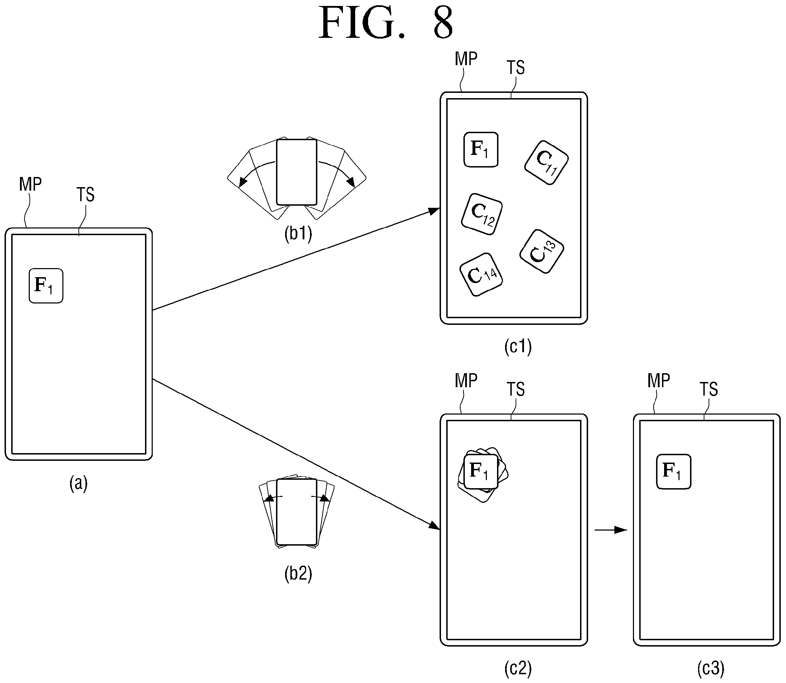

FIG. 8 illustrates a method of providing a UI according to a second embodiment of the present invention. The example illustrated in FIG. 8 is the same as the example illustrated in FIG. 7 except that a folder F₁ is initially displayed in a GUI, instead of the icon I₁, and that content items C₁₁, C₁₂, C₁₃, C₁₄ are displayed, instead of the sub-icons I₁₁, I₁₂, I₁₃, and I₁₄, in response to a 'shake' motion, and thus, a detailed description of the example illustrated in FIG. 8 will be omitted.

### 3. Embodiment 3

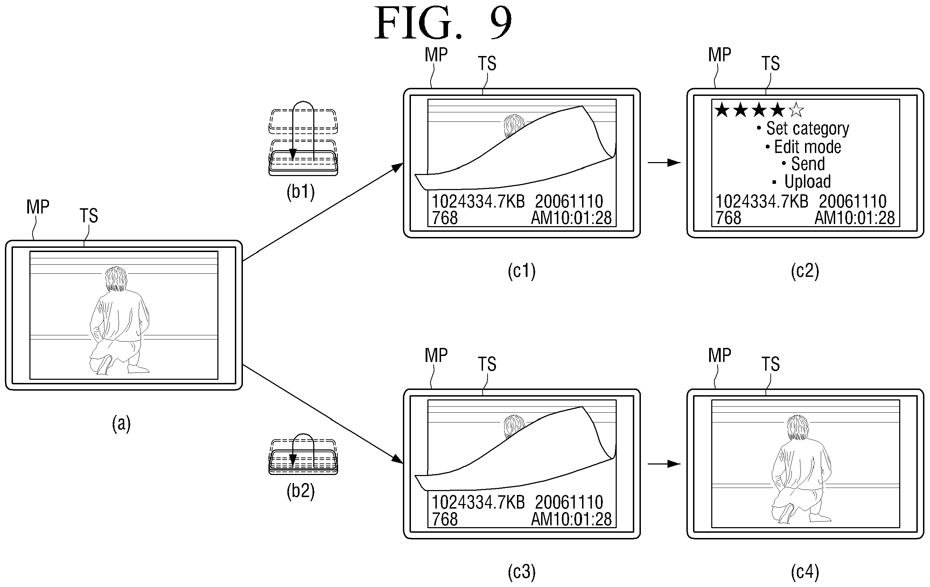

FIG. 9 illustrates a method of providing a UI according to a third embodiment of the present invention. FIG. 9(a) illustrates a mobile phone MP with a touch screen that displays a GUI. Referring to FIG. 9(a), a photo is displayed in the GUI.

FIG. 9(b₁) illustrates a 'high bounce' motion, i.e., the motion of bouncing up high and putting down the mobile phone MP. FIGS. 9(c₁) and 9(c₂) illustrate variations in the GUI in response to the 'high bounce' motion.

Referring to FIGS. 9(c₁) and 9(c₂), an image of the photo being turned over may be displayed, and detailed information on the photo and a plurality of menu items may be displayed.

FIG. 9(b₂) illustrates a 'low bounce' motion, i.e., the motion of bouncing up the mobile phone MP low and putting down the mobile phone MP. FIGS. 9(c₃) and 9(c₄) illustrate variations in the GUI in response to the 'low bounce' motion.

Referring to FIGS. 9(c₃) and 9(c₄), a visual effect of the photo trying, but failing, to be turned over may be displayed in the GUI. Accordingly, a user may intuitively recognize that the photo has failed to be turned over.

Then, the user may naturally assume that a higher bounce of the mobile phone MP would successfully turn over the photo so that the detailed information on the photo and the menu items may be displayed on the touch screen.

Turning over an image and displaying detailed information on the image and one or more menu items may be a function corresponding to a 'bounce' motion.

Therefore, in response to a high bounce of the mobile phone MP, the mobile phone MP may perform the function corresponding to the 'bounce' motion. On the other hand, in response to a low bounce of the mobile phone MP, the mobile phone MP may provide a visual effect that helps the user to intuitively recognize what the function corresponding to the 'bounce' motion is.

### 4. Embodiment 4

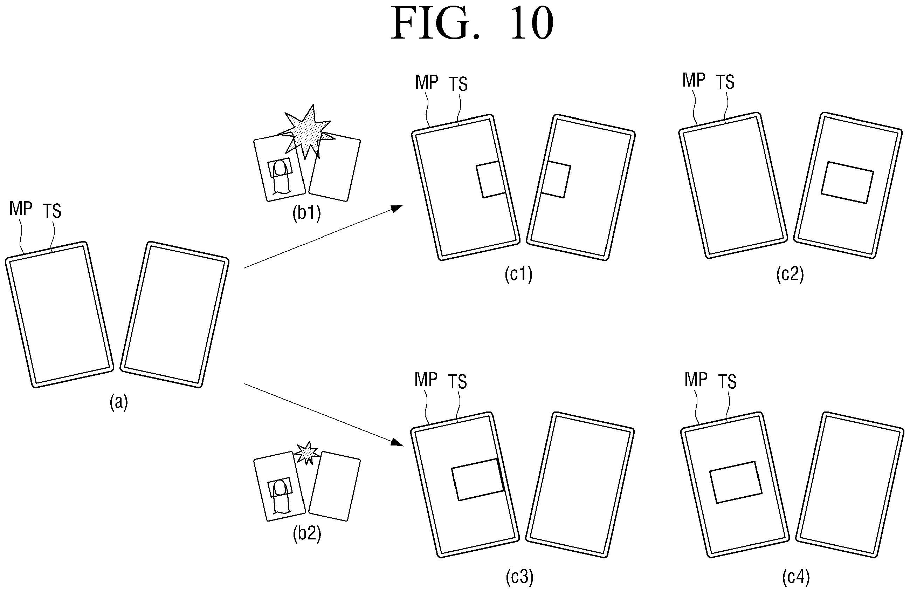

FIG. 10 illustrates a method of providing a UI according to a fourth embodiment of the present invention. FIG. 10(a) illustrates a mobile phone MP with a touch screen that displays a GUI. Referring to FIG. 10(a), a photo is displayed in the GUI.

FIG. 10(b₁) illustrates a 'hard bump' motion, i.e., the motion of tapping the mobile phone MP hard against another mobile terminal. FIGS. 10(c₁) and 10(c₂) illustrate variations in the GUI in response to the 'hard bump' motion.

Referring to FIGS. 10(c₁) and 10(c₂), a visual effect of the photo being transferred from the mobile phone MP to the other mobile phone may be displayed in the GUI, and the photo may disappear from the screen of the mobile phone MP and may appear on the screen of the other mobile phone. That is, the photo may be transmitted from the mobile phone MP to the other mobile phone.

FIG. 10(b₂) illustrates a 'gentle bump' motion, i.e., the motion of tapping the mobile phone MP lightly against another mobile phone. FIGS. 10(c₃) and 10(c₄) illustrate variations in the GUI in response to the 'gentle bump' motion.

Referring to FIGS. 10(c₃) and 10(c₄), a visual effect of the photo trying, but failing to be transferred to the other mobile phone may be displayed in the GUI. Accordingly, a user may intuitively recognize that the photo has failed to be transmitted to the other mobile phone.

Then, the user may naturally assume that a harder tap of the mobile phone MP against the other mobile phone would successfully transmit the photo to the other mobile terminal.

Transmitting an image from the mobile terminal MP to another mobile terminal with a visual effect of the image being transferred from the mobile terminal MP to another mobile terminal may be a function corresponding to a 'bump' motion.

Therefore, in response to the mobile phone MP being tapped hard against another mobile phone, the mobile phone MP may perform the function corresponding to the 'bump' motion. On the other hand, in response to the mobile terminal MP being tapped lightly against another mobile terminal, the mobile phone MP may provide a visual effect that helps the user to intuitively recognize what the function corresponding to the 'bump' motion is.

### 5. Embodiment 5

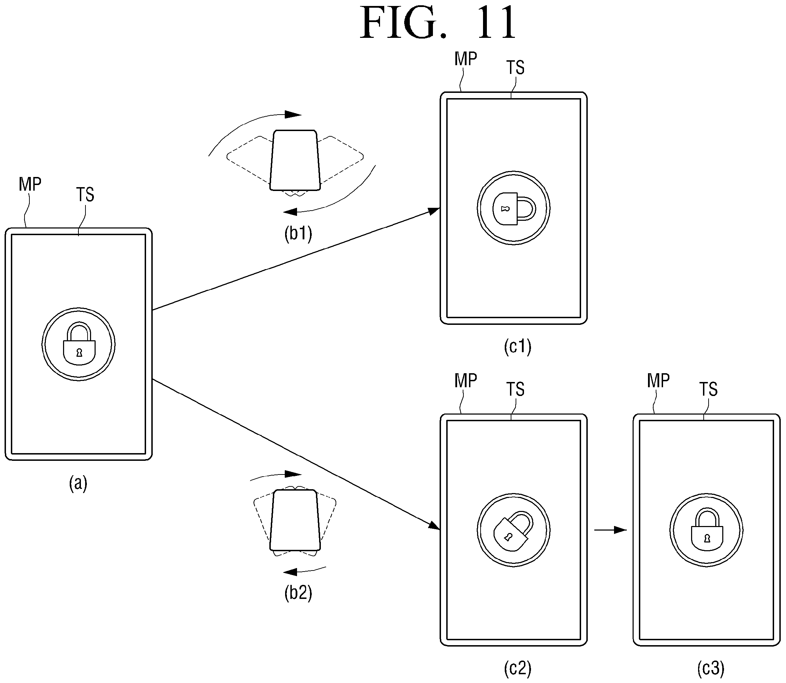

FIG. 11 illustrates a method of providing a UI according to a fifth embodiment of the present invention. FIG. 11(a) illustrates a mobile phone MP with a touch screen that displays a GUI. Referring to FIG. 11(a), a hold icon is displayed in the GUI.

FIG. 11(b₁) illustrates a 'hard spin' motion, i.e., the motion of spinning the mobile phone MP hard. FIG. 11(c₁) illustrates a variation in the GUI in response to the 'hard spin' motion.

Referring to FIG. 11(c₁), the GUI displays a rotated hold icon in response to the 'hard spin' motion, and the mobile phone MP may be switched to a hold mode so that a user input to the touch screen TS may be ignored.

FIG. 11(b₂) illustrates a 'gentle spin' motion, i.e., the motion of spinning the mobile phone MP gently. FIGS. 11(c₂) and 11(c₃) illustrate variations in the GUI in response to the 'gentle spin' motion.

Referring to FIGS. 11(c₂) and 11(c₃), a visual effect of the hold icon trying, but failing to be rotated may be displayed in the GUI. Accordingly, a user may intuitively recognize that the hold icon has failed to be rotated.

Then, the user may naturally assume that a harder spinning of the mobile phone MP would successfully rotate the hold icon.

Switching the mobile phone MP to the hold mode while maintaining the hold icon to be rotated may be a function corresponding to a 'spin' motion.

Therefore, in response to the mobile phone MP being spun hard, the mobile phone MP may perform the function corresponding to the 'spin' motion. On the other hand, in response to the mobile terminal MP being spun gently, the mobile phone MP may provide a visual effect that helps the user to intuitively recognize what the function corresponding to the 'spin' motion is.

### 6. Embodiment 6

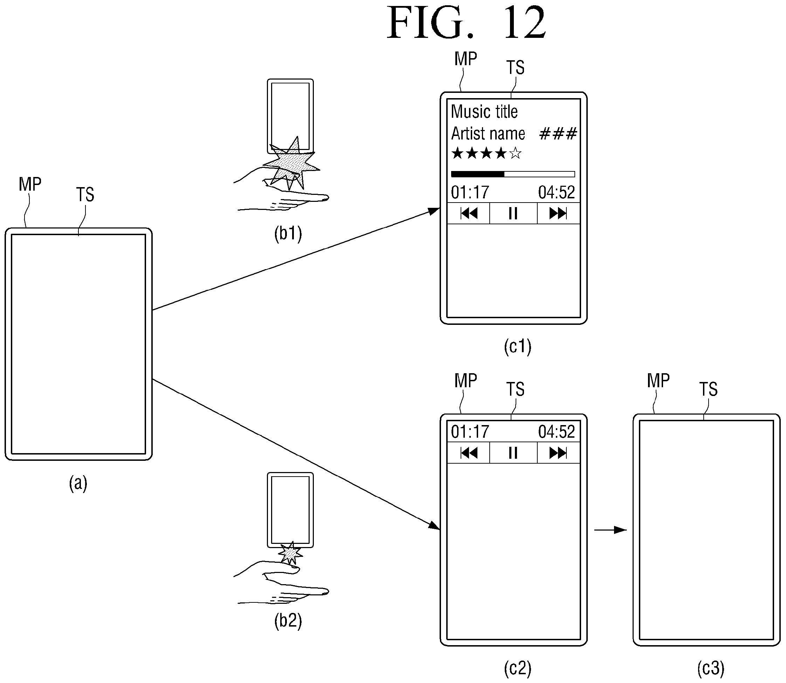

FIG. 12 illustrates a method of providing a UI according to a sixth embodiment of the present invention. FIG. 12(a) illustrates a mobile phone MP with a touch screen that displays a GUI. Referring to FIG. 12(a), no controller is displayed in the GUI.

FIG. 12(b₁) illustrates a 'hard tap' motion, i.e., the motion of tapping the bottom of the mobile phone MP hard with a hand. FIG. 12(c₁) illustrates a variation in the GUI in response to the 'hard tap' motion.

Referring to FIG. 12(c₁), the GUI displays a music player in response to the 'hard tap' motion. The music player may be configured to appear as if pulled down from the top of the touch screen TS.

FIG. 12(b₂) illustrates a 'soft tap' motion, i.e., the motion of tapping the bottom of the mobile phone MP gently with a hand. FIGS. 12(c₂) and 12(c₃) illustrates variations in the GUI in response to the 'soft tap' motion.

Referring to FIGS. 12(c₂) and 12(c₃), a visual effect of the music player appearing from the top of the touch screen TS shortly and then readily pulling back from the touch screen TS may be displayed in the GUI. Accordingly, a user may intuitively recognize that the music player has failed to be pulled down from the top of the touch screen TS.

Then, the user may naturally assume that a harder tap of the mobile phone MP would successfully pull down the music player from the top of the touch screen TS.

Pulling down the music player from the top of the touch screen TS so as to be displayed on the touch screen TS may be a function corresponding to a 'tap' motion.

Therefore, in response to the bottom of the mobile phone MP being tapped hard with a hand, the mobile phone MP may perform the function corresponding to the 'tap' motion. On the other hand, in response to the bottom of the mobile terminal MP being tapped gently with a hand, the mobile phone MP may provide a visual effect that helps the user to intuitively recognize what the function corresponding to the 'tap' motion is.

### 7. Embodiment 7

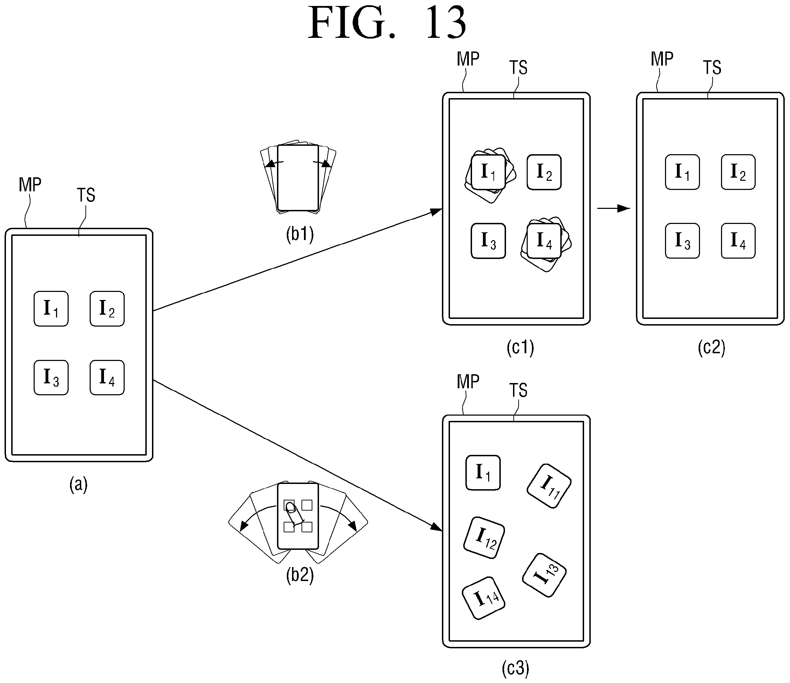

FIG. 13 illustrates a method of providing a UI according to a seventh embodiment of the present invention. FIG. 13(a) illustrates a mobile phone MP with a touch screen TS that displays a GUI. Referring to FIG. 13(a), four icons I₁, I₂, I₃, and I₄ are displayed in the GUI.

FIG. 13(b₁) illustrates a 'gentle shake' motion, i.e., the motion of shaking the mobile phone MP gently. FIGS. 13(c₁) and 13(c₂) illustrate variations in the GUI in response to the 'gentle shake' motion.

Referring to FIGS. 13(c₁) and 13(c₂), a visual effect of a plurality of sub-icons of the icon I₁ and a plurality of sub-icons of the icon I₄ appearing from below the icon I₁ shortly and the icon I₄, respectively, and readily turning back into the bottoms of the icon I₁ and the icon I₄, respectively, is displayed in the GUI. Accordingly, a user may intuitively recognize the sub-icons of the icon I₁ and the sub-icons of the icon I₄ have failed to be taken out from below the icon I₁ and the icon I₄, respectively.

Then, the user may naturally assume that a stronger shake of the mobile phone MP would successfully take out the sub-icons of the icon I₁ and the sub-icons of the icon I₄ from below the icon I₁ and the icon I₄, respectively so that they may appear on the touch screen TS.

The user may also recognize that the icon I₂ and the icon I₃ do not have any sub-icons thereof.

FIG. 13(b₂) illustrates a 'touch-and-shake-hard' motion, i.e., the motion of shaking the mobile phone MP while touching the icon I₁. FIG. 13(c₃) illustrates a variation in the GUI in response to the 'touch-and-shake-hard' motion.

Referring to FIG. 13(c₃), not only the icon I₁, which is being touched by the user, but also the sub-icons of the icon I₁ (i.e., sub-icons I₁₁, I₁₂, I₁₃, and I₁₄) may be displayed in the GUI. The sub-icons I₁₁, I₁₂, I₁₃, and I₁₄ may be displayed as being taken out from below the icon I₁.

### 8. Other Embodiments

### (1) Response to Size of Motion

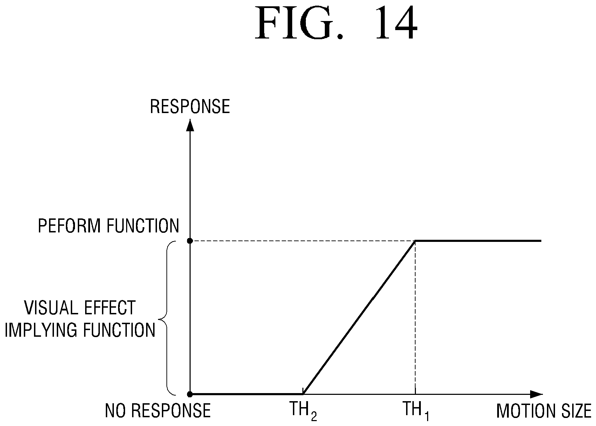

FIG. 14 is a diagram for further explaining the first to seventh embodiments of FIGS. 7 to 13, and particularly, a graph showing how a mobile phone responds to motions of different sizes. Referring to FIG. 14, in a case in which the size of a motion is greater than a first threshold TH₁, a function mapped to the motion may be performed. In a case in which the size of the motion is greater than a second threshold TH₂ but is not greater than the first threshold TH₁, the function mapped to the motion may not be performed, and a visual effect that implies the function mapped to the motion may be output. In a case in which the size of the motion is not greater than the second threshold TH₂, the function mapped to the motion may not be performed, and the visual effect may not be output. That is, the mobile phone may not respond to the motion.

For example, the term 'size of a motion' indicates at least one of the parameters of the motion, i.e., the direction of the motion the speed of the motion, the degree of a shake (or a rotation) involved in the motion, and the width of the motion. The comparison of the size of a motion with a threshold may be performed by comparing the size of the motion with a threshold for at least one of the parameters of the motion. For example, a mobile phone may be configured to perform a function mapped to a motion in response to the speed of the motion exceeding a first threshold for speed or in response to the speed of the motion exceeding the first threshold for speed and the degree of a rotation involved in the motion exceeding a first threshold for rotation.

A visual effect may be configured to vary depending on the size of a motion. For example, the amount of the movement of an icon or an image involved in a visual effect may be configured to be proportional to the values of the parameters of a motion.

### (2) Visual Effect and Other Effects

In the above embodiments, a visual effect that implies a function mapped to a motion may be provided in a case in which the motion is not large in size, but this is merely exemplary.

An audio effect or a tactile effect, instead of a visual effect, may be provided for a motion that is not large in size.

### 9. Device to which Present Invention Can be Applied

The above embodiments have been described, taking a UI provided by a mobile phone as an example. However, the present invention can also be applied to various devices, other than a mobile phone, such as, for example, an MP3 player, a digital camera, a digital camcorder, a PMP, or the like.

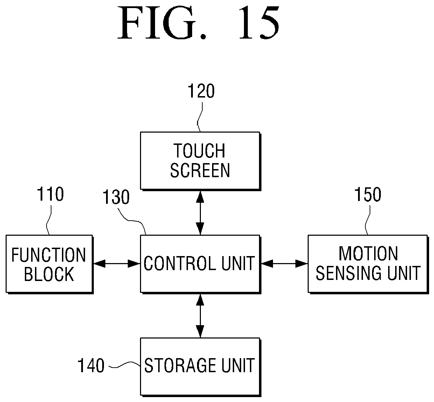

FIG. 15 is a block diagram of a device to which the present invention can be applied. Referring to FIG. 15, the device includes a function block 110, a touch screen 120, a control unit 130, a storage unit 140, and a motion sensing unit 150.

The function block 110 may perform the inherent functions of the devices. For example, in response to the device being a mobile phone, the function block 110 may perform making or receiving a call, sending or receiving an SMS message, and the like. For example, in response to the device being an MP3 player, the function block 110 may play an MP3 file.

The touch screen 120 may serve as a display unit for displaying the results of an operation performed by the function block 110 and a GUI, or may also serve as a user manipulation unit for receiving a user command.

The storage unit 140 may be a storage medium for storing various programs, content, and other data necessary for driving the function block 110 and providing a GUI.

The motion sensing unit 150 may detect a user's motion while the device is being held in the user's hand.

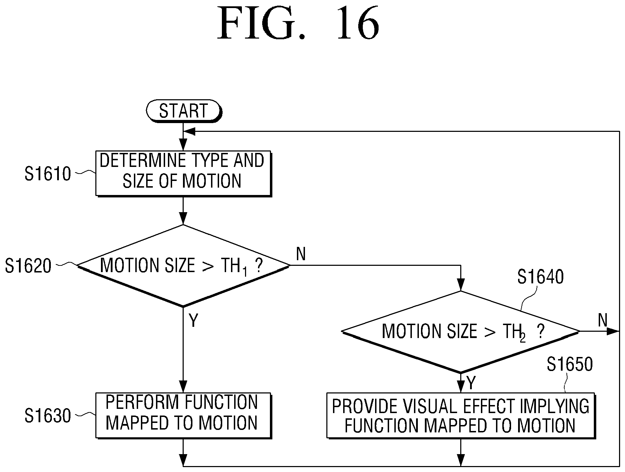

The control unit 130 may identify the type of the detected motion based on the results of the detection performed by the motion sensing unit 150, and may control the function block 110 based on the results of the identification. Also, the control unit 130 may change a GUI currently being displayed on the touch screen 120 and may provide a visual effect on the touch screen 120 based on the results of the identification. The operation of the device will hereinafter be described with reference to FIG. 16.

FIG. 16 is a flowchart illustrating a method of providing a UI according to another embodiment of the present invention.

Referring to FIG. 16, in response to the detection of the user's motion by the motion sensing unit 150, the control unit 130 may identify the type and size of the detected motion (S1610). The control unit 130 may compare the size of the detected motion with a first threshold TH₁ and a second threshold TH₂ (S1620 and S1640).

In response to the size of the detected motion exceeding the first threshold TH₁ (S1620-Y), the control unit 130 may control the function block 110 to perform a function mapped to the detected motion, and may change a GUI currently being displayed on the touch screen 120 (S1630).

In response to the size of the detected motion not exceeding the first threshold TH₁ but exceeding the second threshold TH₂ (S1620-Y and S1640-Y), the control unit 130 may output a visual effect that implies the function mapped to the detected motion via the touch screen 120 (S1650).

In response to the size of the detected motion not exceeding the second threshold TH₂ (S1620-Y and S1640-N), the control unit 130 may not respond to the detected motion.

It will be apparent to those skilled in the art that various modifications and variation can be made in the present invention without departing from the scope of the invention. Thus, it is intended that the present invention cover the modifications and variations of this invention provided they come within the scope of the appended claims.

## Claims

1. A method of providing a user interface, UI, the method comprising:
detecting a motion of a device having a motion sensing unit (150) while the UI is displayed on a touch screen;
identifying a type and a size of the detected motion (operation S1610);
comparing the size of the detected motion to a predetermined first threshold (operation S1620), the size of the detected motion being a value of at least one parameter of the detected motion, the parameter being selected from a group including a direction of the detected motion, a speed of the detected motion, a degree of a shake involved in the detected motion, a degree of a rotation involved in the detected motion, and the width of the detected motion;
in response to the size of the detected motion exceeding the predetermined first threshold, performing a function mapped to the detected motion (operation S1630);
in response to the size of the detected motion not exceeding the predetermined first threshold, outputting an effect that is relevant to the function (operation S1650);
**characterised in that**, in a case in which there are multiple functions that can be performed in response to the size of the detected motion exceeding the predetermined first threshold, the performing comprises performing a function that is selected from among the multiple functions by touching an icon displayed on the touch screen while the motion is detected, in response to the size of the detected motion exceeding the predetermined first threshold.

2. The method of claim 1, wherein the effect relevant to the function comprises a visual effect that helps the user intuitively recognize the function.

3. The method of claim 2, wherein the outputting comprises outputting different visual effects for motions of different sizes.

4. The method of claim 2, wherein the outputting comprises outputting the effect in response to the size of the detected motion not exceeding the first threshold but exceeding a second threshold, which is less than the first threshold.

5. The method of claim 2, wherein, in a case in which there are multiple functions that can be performed in response to the size of the detected motion exceeding the first threshold, the outputting comprises outputting visual effects that are relevant to the multiple functions together in response to the size of the detected motion not exceeding the first threshold.

## Patentansprüche

1. Verfahren zum Bereitstellen einer Benutzerschnittstelle, UI, wobei das Verfahren Folgendes umfasst:
Erkennen einer Bewegung einer Vorrichtung, die eine Bewegungserfassungseinheit (150) aufweist, während die UI auf einem Berührungsbildschirm angezeigt wird;
Identifizieren einer Art und Größe der erkannten Bewegung (Vorgang S1610);
Vergleichen der Größe der erkannten Bewegung mit einem vorbestimmten ersten Schwellenwert (Vorgang S1620), wobei die Größe der erkannten Bewegung ein Wert von zumindest einem Parameter der erkannten Bewegung ist, wobei der Parameter ausgewählt ist aus einer Gruppe, die eine Richtung der erkannten Bewegung, eine Geschwindigkeit der erkannten Bewegung, einen Grad einer Erschütterung, die an der erkannten Bewegung beteiligt ist, einen Grad einer Rotation, die an der erkannten Bewegung beteiligt ist, und die Breite der erkannten Bewegung beinhaltet;
in Reaktion darauf, dass die Größe der erkannten Bewegung den vorbestimmten ersten Schwellenwert überschreitet, Durchführen einer Funktion, die auf die erkannte Bewegung abgebildet ist (Vorgang S1630);
in Reaktion darauf, dass die Größe der erkannten Bewegung den vorbestimmten ersten Schwellenwert nicht überschreitet, Ausgeben eines Effekts, der für die Funktion relevant ist (Vorgang S1650); **dadurch gekennzeichnet, dass**
in einem Fall, in dem es mehrere Funktionen gibt, die in Reaktion darauf, dass die Größe der erkannten Bewegung den vorbestimmten ersten Schwellenwert überschreitet, durchgeführt werden können, das Durchführen Durchführen einer Funktion, die aus den mehreren Funktionen ausgewählt ist, durch Berühren eines Symbols, das auf dem Berührungsbildschirm angezeigt wird, während die Bewegung erkannt wird, in Reaktion darauf, dass die Größe der erkannten Bewegung den vorbestimmten ersten Schwellenwert überschreitet, umfasst.

2. Verfahren nach Anspruch 1, wobei der für die Funktion relevante Effekt einen visuellen Effekt umfasst, der dem Benutzer dabei hilft, die Funktion intuitiv zu erkennen.

3. Verfahren nach Anspruch 2, wobei das Ausgeben Ausgeben verschiedener visueller Effekt für Bewegungen unterschiedlicher Größen umfasst.

4. Verfahren nach Anspruch 2, wobei das Ausgeben Ausgeben des Effekts in Reaktion darauf, dass die Größe der erkannten Bewegung den ersten Schwellenwert nicht überschreitet, aber einen zweiten Schwellenwert überschreitet, der geringer als der erste Schwellenwert ist, umfasst.

5. Verfahren nach Anspruch 2, wobei in einem Fall, in dem es mehrere Funktionen gibt, die in Reaktion darauf, dass die Größe der erkannten Bewegung den ersten Schwellenwert überschreitet, durchgeführt werden können, das Ausgeben Ausgeben visueller Effekte, die relevant für die mehreren Funktionen sind, zusammen in Reaktion darauf, dass die Größe der erkannten Bewegung den ersten Schwellenwert nicht überschreitet, umfasst.

## Revendications

1. Procédé de fourniture d'une interface utilisateur, UI, le procédé comprenant :
la détection d'un mouvement d'un dispositif possédant une unité de détection de mouvement (150) tandis que l'UI est affichée sur un écran tactile ;
l'identification d'un type et d'une taille du mouvement détecté (opération S1610) ;
la comparaison de la taille du mouvement détecté à un premier seuil prédéterminé (opération S1620), la taille du mouvement détecté étant une valeur d'au moins un paramètre du mouvement détecté, le paramètre étant sélectionné dans un groupe incluant une direction du mouvement détecté, une vitesse du mouvement détecté, un degré d'une agitation impliquée dans le mouvement détecté, un degré d'une rotation impliquée dans le mouvement détecté, et la largeur du mouvement détecté ;
en réponse à la taille du mouvement détecté dépassant le premier seuil prédéterminé, l'exécution d'une fonction mappée au mouvement détecté (opération S1630) ;
en réponse à la taille du mouvement détecté ne dépassant pas le premier seuil prédéterminé, l'émission d'un effet qui est applicable à la fonction (opération S1650) ; **caractérisé en ce que**,
dans un cas où il existe de multiples fonctions qui peuvent être exécutées en réponse à la taille du mouvement détecté dépassant le premier seuil prédéterminé, l'exécution comprend l'exécution d'une fonction qui est sélectionnée parmi les multiples fonctions en touchant une icône affichée sur l'écran tactile tandis que le mouvement est détecté, en réponse à la taille du mouvement détecté dépassant le premier seuil prédéterminé.

2. Procédé selon la revendication 1, dans lequel l'effet applicable à la fonction comprend un effet visuel qui aide l'utilisateur à reconnaître intuitivement la fonction.

3. Procédé selon la revendication 2, dans lequel l'émission comprend l'émission de différents effets visuels pour des mouvements de différentes tailles.

4. Procédé selon la revendication 2, dans lequel l'émission comprend l'émission de l'effet en réponse à la taille du mouvement détecté ne dépassant pas le premier seuil mais dépassant un deuxième seuil, qui est inférieur au premier seuil.

5. Procédé selon la revendication 2, dans lequel, dans un cas où il existe de multiples fonctions qui peuvent être exécutées en réponse à la taille du mouvement détecté dépassant le premier seuil, l'émission comprend l'émission d'effets visuels qui sont applicables à de multiples fonctions conjointement en réponse à la taille du mouvement détecté ne dépassant pas le premier seuil.
